# EUROPÄISCHE PATENTSCHRIFT

(11) **EP 0 418 560 B1**
(45) Veröffentlichungstag und Bekanntmachung des Hinweises auf die Patenterteilung: **27.04.1994**
(21) Anmeldenummer: 90115787.5
(22) Anmeldetag: 17.08.1990
(51) Int. Cl.: H01G 9/00

(54) **Verfahren zum Herstellen eines Festelektrolytkondensators in Chip-Bauweise**
Process of manufacture of solid electrolytic chip capacitor
Procédé de fabrication d'un condensateur à électrolyte solide sous forme de chip

(30) Priorität: 19.09.1989 DE 3931263
(43) Veröffentlichungstag der Anmeldung: 27.03.1991
(73) Patentinhaber: SIEMENS AKTIENGESELLSCHAFT, 80333 München (DE)
(72) Erfinder: Schnabel, Werner, Dr.-Ing., Dipl.-Phys., D-7921 Nattheim (DE)

(56) Entgegenhaltungen:
- DE-A- 2 230 629
- FR-U- 2 303 454
- US-A- 4 539 623
- PATENT ABSTRACTS OF JAPAN vol. 13, no. 168 (E-747) 21 April 1989

## Beschreibung

Die Erfindung betrifft ein Verfahren zum Herstellen eines Festelektrolytkondensators in Chip-Bauweise, bei dem ein Sinterkörper aus einem Ventilmetall in einen Systemträger mit Kathoden-und Anodenanschluß eingebaut wird.

Ein derartiges Verfahren ist aus der US 4 483 062 bekannt. Der dort verwendete Systemträger hat getrennte Kathoden- und Anodenanschlüsse.

Bei der Herstellung von Festelektrolytkondensatoren in Chip-Bauweise erfordert der Einbau des Kondensatorelements (fertig beschichtete Anode), bedingt durch die Kleinheit der Abmessungen und die Empfindlichkeit des Kondensatorelements, eine sorgfältig abgestimmte Montage-Technologie. Hierbei ist das Vermeiden von mechanischen Spannungen ein besonderes Problem. Solche mechanische Spannungszustände können sich beim Schweißen und Löten der brückenartigen Konstruktion zwischen Anoden- und Kathodenanschluß und dem Kondensatorelement aufbauen. Hierbei ist die Verbindungsstelle zwischen Sinterkörper und Anodendraht die schwächste Stelle und damit besonders gefährdet. Sie besteht aus dem durch Sinterung erzeugten metallischen Kontakt zwischen einzelnen Pulverkörnchen aus einem Ventilmetall (vorzugsweise Tantal) und dem Anodendraht aus dem gleichen Material wie der Sinterkörper.

An dieser empfindlichen Kontaktstelle von Sinterkörper und Draht können sowohl Zug-, Druck- als auch Drehkräfte auftreten. Erhöhter Reststrom bis zum Kurzschluß des Kondensators ist die Folge solcher mechanischer Verspannungen. Experimentell läßt sich bereits durch eine elastische Verspannung eine Reststromerhöhung nachweisen. Dieser Effekt ist reversibel, d.h. nach Fortnahme der Spannung geht der Reststrom auf seinen ursprünglichen Wert zurück.

Aus DE-A-2 230 629 ist ein Verfahren zum Herstellen einer umhüllten Festelektrolytkondensators in Chip-Bauweise bekannt, wobei die Sinterkörper auf einem als flaches Metallbond ausgebildeten Systemträger befestigt und darauf umhüllt werden und dann die Kathoden- und Anodenanschlüsse aufgetrennt werden.

Aufgabe der Erfindung ist es, ein Montageverfahren zur Herstellung von Festelektrolytkondensatoren in Chip-Bauweise anzuführen, bei dem die geschilderten mechanischen Beanspruchungen vermieden werden.

Diese Aufgabe wird erfindungsgemäß durch des Verfahren gemäß Anspruch 1 gelöst.

Durch diese Ausgestaltung wird die Gefahr einer mechanischen Verspannung praktisch vermieden.

Der Gegenstand der Erfindung wird anhand der folgenden Ausführungsbeispiele erläutert.

In der dazugehörenden Zeichnung zeigen
- FIG 1: einen Systemträger in Seitenansicht und ausschnittsweise in Draufsicht,
- FIG 2: einen Systemträger mit eingebautem Kondensatorelement in Draufsicht und
- FIG 3: einen Systemträger mit eingebautem Kondensatorelement in Seitenansicht.

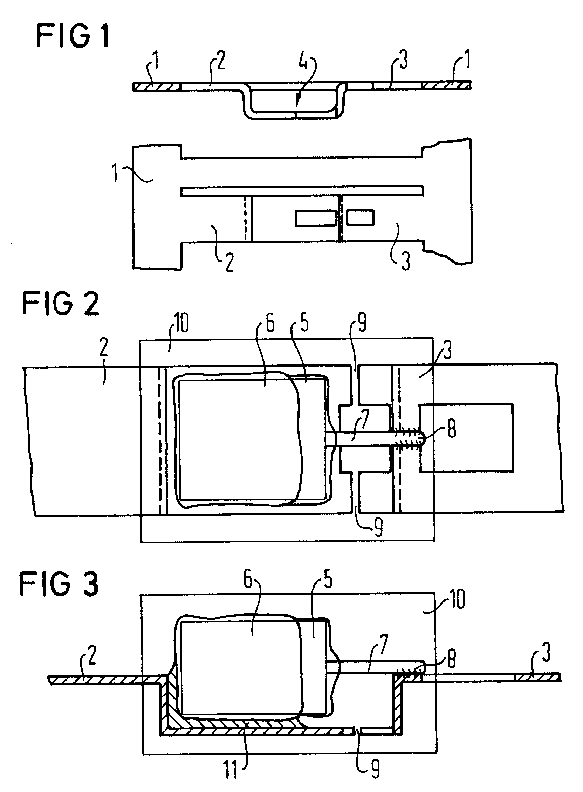

In der FIG 1 ist ein Systemträger dargestellt, der aus einem kontinuierlichen Trägerband 1 besteht, das mit Kathodenanschluß 2 und Anodenanschluß 3 versehen ist. Der Systemträger 1 ist derart geformt, daß im Bereich in dem später das Kondensatorelement eingebaut werden soll, eine entsprechend der Größe des Kondensators vorgeformtes "Einbaunest" 4 vorhanden ist. Dadurch, daß Kathodenanschluß 2 und Anodenanschluß 3 im Bereich des Nestes 4 starr miteinander verbunden sind, sind Relativbewegungen zwischen diesen Anschlüssen mit den damit verbundenen mechanischen Spannungen im Kondensatorelement, nicht möglich.

In den FIG 2 und 3 ist in Drauf- und Seitenansicht ein eingebauter Sinterkörper 5 dargestellt. Der Sinterkörper 5 aus einem Ventilmetall, z.B. Tantal, ist mit einer als Dielektrikum dienenden Oxidschicht versehen und besitzt als Kathode einen Festelektrolyt, z.B. halbleitendes Mangandioxid. Zur Kathodenkontaktierung dient eine leitfähige Schicht 6, z.B. eine Silberleitlackschicht, die den Sinterkörper 5 mittels des Lotes 11 mit dem Kathodenanschluß 2 verbindet. Der Anodendraht 7 aus dem gleichen Material wie der Sinterkörper 5 (vorzugsweise Tantal) ist an der Schweißstelle 8 mit dem Anodenanschluß 3 verbunden. Nach Herstellen der Verbindungen zwischen Sinterkörper 5 und Elektrodenanschlüssen wird der Systemträger an der Stelle 9 beispielsweise mit Hilfe eines Lasers aufgetrennt, wodurch Kathodenanschluß 2 und Anodenanschluß 3 voneinander getrennt werden.

Die Herstellung der Sinteranodenkörper 5 bis zur Herstellung der Kathodenkontaktschicht 6 erfolgt beispielsweise nach dem aus der DE 27 40 745 C2 bekannten Verfahren. Hierbei werden die Anodenkörper an Haltevorrichtungen befestigt und weiterverarbeitet. Da der exakte Abstand der Anoden an der Haltevorrichtung keine Voraussetzung des Montageverfahrens ist, kann der kleinstmögliche Abstand gewählt werden und plättchenförmige Anoden können statt längs- quer-geschweißt werden. Durch die geschilderten Maßnahmen läßt sich gegenüber der bisherigen Fertigung eine Stückzahlsteigerung pro Rahmen von über 50 % erzielen.

Es ist vorteilhaft, den Anodenkörper 5 vor dem Montieren in das Trägerband 1 zu verzinnen. Diese Maßnahmehat bei der Montage die Vorteile, daß die Anoden einen besseren mechanischen Schutz vor Beschädigung aufweisen, daß eine bessere automatische Handhabbarkeit bei einem Pick-and-Place-Vorgang vorliegt und daß schließlich ein besseres Benetzen bei einem Reflow-Löten auch nach längerer Zwischenlagerung gewährleistet ist. Es ergibt sich deshalb eine höhere Fertigungssicherheit, welche Voraussetzung für hohe Ausbeute und gleichmäßig hohen Qualitäts- und Zuverlässigkeitsstandard der Bauelemente ist.

Die Verzinnung der Anoden ist in den automatischen Fertigungsablauf integrierbar und geschieht folgendermaßen, daß zunächst die Anoden mit einer Lötpaste beschichtet werden, einem Reflow-Löten (IR-, Heißluft-oder Vapor-Phase-Verfahren) unterzogen werden und daß danach die Anoden von der Haltevorrichtung abgetrennt (z.B. mit einem Laser, was keine mechanische Belastung der Anoden ergibt und bei dem außerdem ein dünnerer Anodendraht eingesetzt werden kann) und geordnet magaziniert werden. Statt der Magazinierung ist auch die spätere geordnete Bereitstellung über ein Rüttlersystem möglich.

Die Verfahrensschritte können vorzugsweise mit Hilfe eines Roboters durchgeführt werden, der einzelne Haltevorrichtungen der Reihe nach verarbeitet:
- Entnahme einer Haltevorrichtung mit Anoden aus dem Halterahmen,
- Beschichten der Anoden mit Lötpaste,
- Reflow-Löten der Paste mit dem Vapor-Phase-Verfahren, wobei das überschüssige Flußmittel abtropft, so daß keine zusätzliche Reinigung erforderlich ist,
- Abschneiden und Magazinieren der Anoden.

Bei der Montage wird der Sinterkörper 5 in die vorgesehene Position gebracht, der Anodendraht 7 wird angeschweißt und der Sinterkörper 5 angelötet oder mit Leitkleber angeklebt. Für die Arbeitsgänge Positionieren, Schweißen, Löten oder Kleben werden die üblichen Technologien eingesetzt. Im Anschluß an die Montage des Kondensatorelements 5 wird dann die Verbindung zwischen Anoden- 3 und Kathodenanschluß 2 des Systemträgers 1 aufgetrennt, was beispielsweise mit Hilfe eines Lasers erfolgen kann. Die restlichen Fertigungsschritte, wie Umhüllen (10), Trennen, Biegen der Anschlüsse 2, 3, Endformieren, Prüfen usw. erfolgen in der üblichen Weise.

Zusammenfassend können folgende wesentliche Merkmale des Montageverfahrens herausgehoben werden:
- höhere Maßgenauigkeit,
- mechanisch spannungsfreie Montage und somit höhere Ausbeuten,
- Miniaturisierbarkeit,
- Möglichkeit geringerer Anoden-Drahtlängen.

Ein zusätzlicher Vorteil besteht darin, daß durch die spezielle Ausgestaltung des Systemträgers 1 ein Kondensator mit besonders niedriger Induktivität resultiert. Dies kommt daher, weil der die Induktivität bestimmende Bereich zwischen Anoden- 3 und Kathodenanschluß 2 besonders klein gehalten wird.

## Patentansprüche

1. Verfahren zum Herstellen eines umhüllten Festelektrolytkondensators in Chip-Bauweise, bei dem ein Sinterkörper (5) aus einem Ventilmetall auf einem Systemträger (1) mit nicht getrennten Kathoden- (2) und Anodenanschluß (3) befestigt wird und bei dem erst nach der Montage des Sinterkörpers (5) die Verbindung zwischen Kathoden- (2) und Anodenanschluß (3) aufgetrennt wird und des Umhüllen erfolgt,
**dadurch gekennzeichnet,**
daß ein Systemträger (1) verwendet wird, der ein der Größe des Kondensators entsprechendes vorgeformtes Einbaunest (4) besitzt, und daß die Auftrennung der Verbindung zwischen Kathoden- (2) und Anodenanschluß (3) im Bereich des Nestes (4) vor dem Umhüllen (10) erfolgt.

2. Verfahren nach Anspruch 1, **dadurch gekennzeichnet,** daß die Verbindung zwinchen Kathoden- (2) und Anodenanschluß (3) mit Hilfe eines Lasers aufgetrennt wird.

## Claims

1. Method for producing a sheathed solid-electrolyte capacitor of chip construction, in the case of which a sintered body (5) composed of valve metal is mounted on a system support (1) having a cathode connection (2) which is not separated and an anode connection (3), and in the case of which the connection between the cathode connection (2) and anode connection (3) is not separated, or the sheathing carried out, until after installation of the sintered body (5), characterized in that a system carrier (1) is used which has a preformed installation nest (4) which corresponds to the size of the capacitor, and in that the connection between the cathode connection (2) and the anode connection (3) in the region of the nest (4) is separated before the sheathing (10).

2. Method according to Claim 1, characterized in that the connection between the cathode connection (2) and the anode connection (3) is separated with the aid of a laser.

## Revendications

1. Procédé pour fabriquer un condensateur à électrolyte solide enrobé, sous forme de chip, selon lequel on fixe une pièce frittée (5) en un métal pour soupape sur un support (1) d'un système, comportant une borne de cathode (2) et une borne d'anode (3) non séparées, et selon lequel on supprime la liaison entre la borne de cathode (2) et la borne d'anode (3) et on réalise l'enrobage, seulement après le montage de la pièce frittée (5), caractérisé par le fait qu'on utilise un support (1) du système, qui possède une cavité de montage (4) préformée qui correspond à la dimension du condensateur, et que la suppression de la liaison entre la borne de cathode (2) et la borne d'anode (3) s'effectue dans la zone de la cavité (4), avant l'enrobage (10).

2. Procédé suivant la revendication 1, caractérisé par le fait qu'on supprime la liaison entre la borne de cathode (2) et la borne d'anode (3) à l'aide d'un laser.
